# EUROPÄISCHE PATENTSCHRIFT

(11) **EP 1 621 241 B1**
(45) Veröffentlichungstag und Bekanntmachung des Hinweises auf die Patenterteilung: **21.02.2007**
(21) Anmeldenummer: 05106052.3
(22) Anmeldetag: 04.07.2005
(51) Int. Cl.: B01D 29/15, B01D 29/96

(54) **Flüssigkeitsfilter mit einem austauschbaren Ringfilterelement und einer Leerlaufeinrichtung**
Liquid filter with exchangable ring filter element and drain structure
Filtre à liquide avec un élément filtrant annulaire et un équipement de vidange

(30) Priorität: 30.07.2004 DE 102004036972
(43) Veröffentlichungstag der Anmeldung: 01.02.2006
(73) Patentinhaber: MAHLE Filtersysteme GmbH, 70376 Stuttgart (DE)
(72) Erfinder: Stange, Frank, 70736, Fellbach (DE)
(74) Vertreter: Patentanwalts-Partnerschaft Rotermund + Pfusch + Bernhard

(56) Entgegenhaltungen:
- EP-A- 1 036 584
- DE-A1- 3 538 589
- DE-A1- 10 235 902
- DE-A1- 19 538 883
- DE-U1- 9 219 011
- FR-A- 2 823 683
- US-A- 5 718 825
- US-A1- 2002 100 720
- US-A1- 2004 031 745
- US-B1- 6 506 303

## Beschreibung

Die Erfindung betrifft ein Flüssigkeitsfilter mit einem austauschbaren Ringfilterelement und einer Leerlaufeinrichtung nach dem Oberbegriff des Patentanspruchs 1 sowie Ringfilterelemente für ein solches Filter nach dem Anspruch 11.

Ein solches Flüssigkeitsfilter ist aus DE 35 38 589 C2 bekannt. Bei der dortigen Leerlaufeinrichtung ist der Leerlauföffnung in dem Boden des Filtergehäuses ein Ringkanal zugeordnet, dessen radiale Breite erheblich geringer ist als die radiale Erstreckung des zugeordneten Endes des Ringfilterelementes. An das betreffende Ende des Ringfilterelementes, das heißt an einer dort vorgesehenen Endscheibe, ist ein axial abstehender Dichtring angeformt, der unter axialer Vorspannung dichtend an den Seitenflanken der der Leerlauföffnung zugeordneten Ringnut dichtend anliegen kann. Bei der axial abstehenden Dichtung handelt es sich um ein zusätzlich zu einer erforderlichen Endscheibe notwendiges Bauelement. Durch das axiale Abstehen dieser Dichtung wird die axiale Baulänge des gesamten Flüssigkeitsfilters vergrößert.

Ein Filter mit den Merkmalen a - g des Oberbegriffes des Anspruchs 1 ist aus DE 195 38 883 A1 bekannt. Die Leerlauföffnung nach dem Merkmal (f) des Oberbegriffes des Anspruchs 1 ist dort bei in das Unterteil des Filtergehäuses eingesetztem Ringfilterelement durch einen von der unteren Endscheibe des Ringfilterelementes ausgehenden Ringstutzen gedichtet. Zur Dichtung greift dieser Ringstutzen in einen, im Boden des Unterteils für dessen Aufnahme speziell vorgesehenen Ringkanal ein, wobei die Leerlauföffnung axial in den Ringkanalboden einmündet. Um in dem Ringkanal dichten zu können, besitzt der Ringstutzen radial innen und außen jeweils einen Radialdichtring. Damit sind bei dieser Ausführung ein an die untere Endscheibe des Ringfilterelementes vorzusehender Ringstutzen, zwei in diesen einzusetzende Radiazdichtringe sowie ein speziell zur Aufnahme des Ringstutzens vorzusehender Ringkanal innerhalb des Bodens des Filtergehäuse-Unterteils erforderlich.

Bei einem aus US 2004/0031745 A1 bekannten Flüssigkeitsfilter fehlt eine Leerlauföffnung, die im Betriebszustand des Filters geschlossen und bei herausgenommenem Ringfilterelement geöffnet ist.

Die Erfindung beschäftigt sich mit dem Problem, bei einem gattungsgemäßen Flüssigkeitsfilter die Leerlaufeinrichtung mit möglichst einfachen sicher wirkenden und raumsparend einsetzbaren Mitteln realisieren zu können.

Gelöst wird dieses Problem durch ein gattungsgemäßes Flüssigkeitsfilter mit den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, die Leerlauföffnung ohne eine besondere, dieser zugeordnete Ringnut direkt in denjenigen Ringraum des Filtergehäuses münden zu lassen, in dem das Ringfilterelement den zentralen Ablauf-Stutzen umschließt. Die notwendige Dichtung zwischen einerseits Rein- und Rohraum des Flüssigkeitsfilters und andererseits gegenüber der Leerlauföffnung erfolgt ausschließlich durch die betreffende Endscheibe des Ringfilterelementes mit einer radial inneren Anlage an dem Ablauf-Stutzen und radial äußeren Anlage an der Innenfläche der Filtergehäusewand. Durch den Einsatz ausschließlich radial wirkender Dichtungen ist zur Erzeugung der Dichtwirkung keine axiale Verspannung des Ringfilterelementes erforderlich.

Die radialen Dichtungen können in beliebiger Weise an die Endscheibe des Ringfilterelementes angesetzt oder angeformt sein.

Bei einer besonders vorteilhaften Ausgestaltung sind die radialen Dichtungen einstückiger Bestandteil der betreffenden Endscheiben.

Dabei können die Endscheiben aus Vlies bestehen und radial außen und innen überstehende Dichtungsbereiche aufweisen. Diese radial überstehenden Dichtungsbereiche können um etwa 90° um die Endscheibe geklappt sein und durch die Endscheibe gegenüber radial innen den Ablauf-Stutzen und radial außen gegenüber der Gehäuseinnenwand verpresst sein. Verpresst sein bedeutet, dass der Ringspalt zwischen Endscheibe und jeweiligem Widerlager eine geringere Weite aufweist als das Vliesmaterial in unverpresstem Zustand, das heißt in einem Zustand, in dem es sich noch außerhalb des betreffenden Ringspaltes befindet. Damit derartige im Stand der Technik an sich bekannte Vliesdichtungen mit Bezug auf den angrenzenden Ringfilterelementebereich dicht sein können, ist diesen Vliesdichtringen an dem Ringfilterelement jeweils ein Stützring aus festem Material zugeordnet. Radial innen kann dieser Stützring von einer üblichen Ringfilterzarge gebildet sein. Radial außen ist ein speziell zu diesem Zweck dienender Ring einzusetzen.

Eine weitere, besonders vorteilhafte erfindungsgemäße Ausführungsführung besteht darin, die betreffende Endscheibe aus einem kompakten Material wie beispielsweise Polyamid herzustellen und die radialen Dichtbereiche als jeweils rechtwinklig abstehende Ringstege aus gleichem Material zu gestalten. Die Ringstege erhalten dabei eine V-förmige Querschnittsform, wobei der Fußbereich des V radial abragt. Derartige Stegformen sind als Dichtungsstege bei Ringfilterelementen an sich bereits bekannt. Ihre Dichtwirkung wird insbesondere dadurch erzielt, dass die Dichtungen im dichtenden Zustand elastisch verformt sind und zwar durch ein Aufweiten der V-Schenkel des Dichtsteges.

Insbesondere die radial äußere Dichtung des Ringfilterelementes kann axial abstehend ausgebildet sein, um in eine in dem Filtergehäuseboden zugeordnete Ringnut radial dichtend eingreifen zu können.

Vorteilhafte, nachstehend noch näher erläuterte Ausgestaltungen der Erfindung sind in der Zeichnung darstellt.

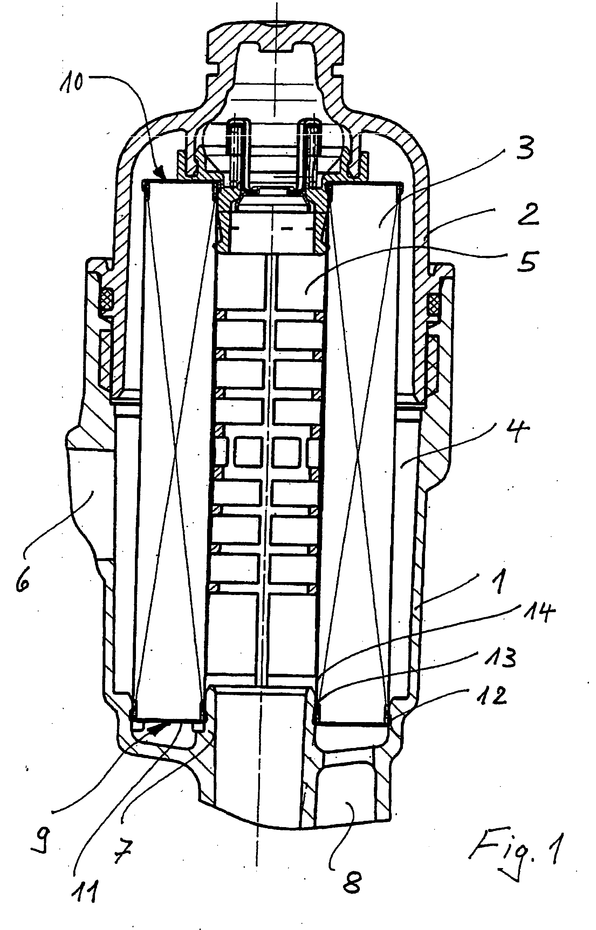

In dieser zeigen
- Fig. 1: einen Längsschnitt durch ein Flüssigkeitsfilter mit einem Ringfilterelement mit einer an einem von dessen Enden kompakten ringförmigen Endscheibe mit angeformten Radialdichtungen,
- Fig. 2: einen vergrößerten Ausschnitt des Flüssigkeitsfilters an dessen die Endscheibe mit angeformten Radialdichtungen nach Fig. 1 aufweisendem Ende,
- Fig. 3: einen Ausschnitt nach Fig. 2 mit einer alternativen Endscheibe aus Vlies,
- Fig. 4: einen Ausschnitt nach Fig. 2 mit einer kompakten Endscheibe mit angesetzten Radialdichtungen aus Vlies.

In einem zum Filtern von Flüssigkeit, insbesondere Motoröl eines Kraftfahrzeuges, dienenden Filter mit einem Unterteil 1 und einem Oberteil 2, die voneinander trennbar sind, ist ein radial durchströmbares Ringfilterelement 3 austauschbar gelagert.

Das Ringfilterelement 3 teilt den Innenraum des Filters in einen Rein- und einen Rohraum. Wo die vorgenannten Räume radial liegen, das heißt innen oder außen, hängt davon ab, in welcher Richtung das Ringfilterelement 3 durchströmt wird. In der Zeichnung ist daher lediglich beispielhaft radial außen ein Rohraum 4 und radial innen ein Reinraum 5 eingetragen.

Das Filter besitzt einen Zulauf 6 in den Rohraum 4 sowie im Zentrum einen Ablauf-Stutzen 7. Des weiteren befindet sich in dem Boden des Unterteiles 1 in einem radial zwischen dem Ablauf-Stutzen 7 und der Innenfläche der Außenwand des Unterteiles 1 eine Leerlauföffnung 8. Damit Flüssigkeit aus dieser Leerlauföffnung 8 abfließen kann, muss das Filter entsprechend ausgerichtet sein, das heißt die Leerlauföffnung 8 muss im Einbauzustand des Filters im wesentlichen unten liegen.

Das Ringfilterelement 3 besitzt zwei axiale Enden und zwar ein erstes Ende 9, das der Leerlauföffnung 8 zugeordnet ist und ein zweites Ende 10, an dem das Ringfilterelement 3 nach axial außen verschlossen ist über eine durchgehende ringförmige Endscheibe an diesem zweiten Ende 10.

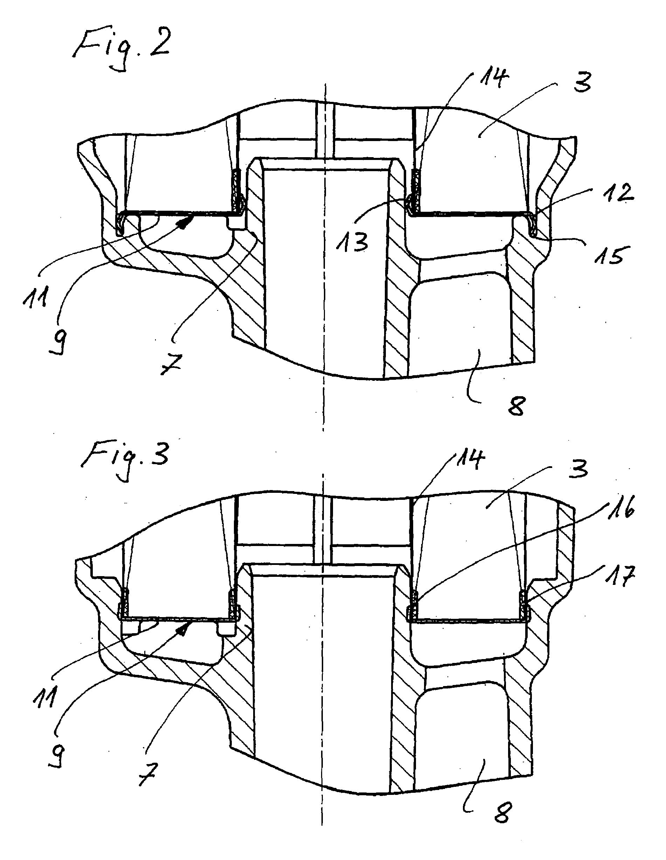

An dem ersten Ende 9 ist das Ringfilterelement 3 nach Fig. 2 mit einer ringförmigen, einstückigen und kompakten Endscheibe 11 versehen. Das Material dieser Endscheibe 11 kann insbesondere Polyamid sein. Diese Endscheibe 11 besitzt einen radial äußeren Dichtbereich 12 sowie einen radial inneren Dichtbereich 13. Beide Dichtbereiche 12, 13 sind als Ringstege mit einem jeweils V-förmigen Querschnitt ausgebildet. In dem radial inneren Dichtbereich 13 ist der betreffende Ringsteg dicht verspannt zwischen einer Innenzarge 14 des Ringfilterelementes 3 und dem Ablauf-Stutzen 7. In dem Ringspalt zwischen der Innenzarge 14 und dem Stutzen 7 ist die Dichtung in radialer Richtung gespannt durch aufgeweitete Schenkel des V-förmigen Dichtringsteges.

In dem radial äußeren Dichtbereich 12 ist ebenfalls einstückig von der Endscheibe 11 ausgehend ein Dichtringsteg mit einer Form entsprechend derjenigen des radial inneren Dichtbereiches 13 vorgesehen. Allerdings ragt in dem radial äußeren Dichtbereich dieser Dichtringsteg nach axial außen von der Endscheibe 11 ab und greift dort in eine diesen Dichtringsteg speziell zugeordnete Ringnut 15 radial dichtend ein.

Die Funktion des vorstehend beschriebenen Filters mit Bezug auf einen Flüssigkeitsablauf durch die Leerlauföffnung 8 ist wie folgt.

Möglichst bereits gleichzeitig mit dem Öffnen des Filters, das heißt dem Abtrennen des Oberteiles 2 von dem Filter-Unterteil 1 wird das Ringfilterelement 3 nach oben angehoben, wodurch ein Flüssigkeitsabfluss zumindest zunächst aus dem Rohraum 4 erfolgen kann. Die radial äußeren und inneren Dichtungsbereiche 12 und 13 können mit Bezug auf ihre Widerlager des Filtergehäuses durch axial unterschiedliche Länge dieser Widerlager derart ausgelegt sein, dass bei einem geringfügigen Anheben des Ringfilterelementes 3 zunächst lediglich ein Flüssigkeitsablauf aus dem Rohraum 4 möglich ist, während Flüssigkeit aus dem Reinraum 5 erst bei praktisch entleertem Rohraum 4 abfließen kann. Hierdurch kann sichergestellt werden, dass aus dem Rohraum 4 keine ungefilterte Flüssigkeit in den Ablauf-Stutzen 7 gelangen kann.

Bei einem Filter, das mit einem Schraubdeckel als Oberteil 2 versehen ist, an dem das Ringfilterelement 3 lösbar drehbar gelagert ist, wird beim Öffnen des Schraubdeckels das Ringfilterelement 3 ganz allmählich aus seiner Betriebsstellung angehoben, wodurch ein langsames Entleeren während der Zeitdauer des Abschraubens des Deckels erfolgen kann. Bei vollständig abgeschraubtem Deckel, d.h. Oberteil 2, ist bei entsprechender Auslegung des Schraubverschlusses sowie der Leerlaufeinrichtung eine vollständige Entleerung erreicht, bevor eine Aufhebung der durch das Ringfilterelement 3 bewirkten Trennung zwischen Filterroh- und -reinraum 4; 5 erfolgt ist.

Bei der Ausführung nach Fig. 3 ist der Leerlauföffnung 8 an dem Ringfilterelement 3 eine Endscheibe 11 aus Vlies zugeordnet. Die Dichtungsbereiche 12 und 13 werden dort von überstehenden Vliesringstegen gebildet, die bei in das Filter eingesetztem Ringfilterelement um etwa 90° umgebogen sind und in diesem Zustand jeweils als Ringspaltdichtung dienen. Der jeweilige Ringspalt besitzt eine Spaltweite, die geringer ist als das unverpresste Vliesmaterial, so dass das Vliesmaterial in den betreffenden Ringspalten dichtungswirkend verpresst wird. Um mit Bezug auf das Ringfilterelement 3 dichtend wirken zu können, stützen sich die dichtenden Ringstege des Vliesmaterials an Stützringen 16 und 17 ab. Der innere Stützring 16 ist Bestandteil der Innenzarge 14 des Ringfilterelementes 3. Der äußere Stützring 17 ist ein ausschließlich zu diesem Zweck auf das Ringfilterelement 3 aufgezogener Ring.

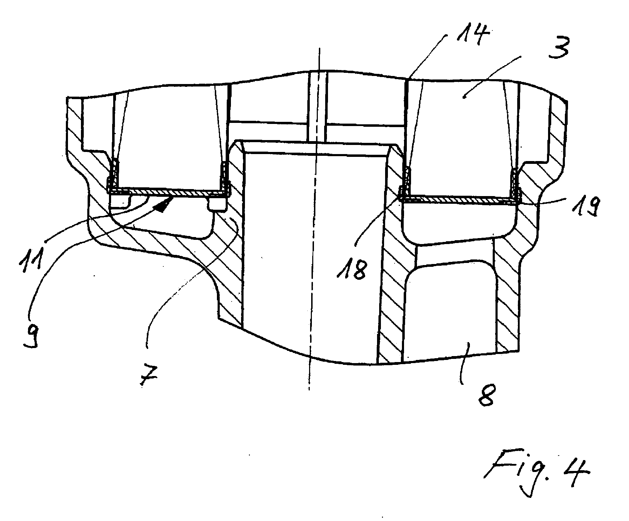

Die Ausführung nach Fig. 4 entspricht im wesentlichen derjenigen nach Fig. 3. Anstelle einer einstückigen Endscheibe 11 aus Vlies ist hier eine kompakte Endscheibe 11 aus beispielsweise Polyamid vorgesehen mit radial innen und außen angeformten Vliesdichtungen 18, 19 als radial äußerer und innerer Dichtbereich 12, 13.

Alle in der Beschreibung und in den nachfolgenden Ansprüchen dargestellten Merkmale können sowohl einzeln als auch in beliebiger Form miteinander erfindungswesentlich sein.

## Patentansprüche

1. Flüssigkeitsfilter, bei dem
(a) das Gehäuse ein topfförmiges Unterteil (2) und ein von diesem Unterteil reversibel lösbares, deckelartiges Oberteil (2) umfasst, von denen ein zylindrischer Innenraum eingeschlossen ist,
(b) ein Ringfilterelement (3) mit radial durchströmbarem Filtermaterial austauschbar in das Filter-Gehäuse (1, 2) einsetzbar ist,
(c) das Oberteil (2) des Filtergehäuses in dessen Betriebslage oben liegt,
(d) das Ringfilterelement (3) im Unterteil auf einen zentralen, nach außerhalb des Filtergehäuses führenden Ablauf-Stutzen (7) dicht aufschiebbar ist,
(e) das eingesetzte Ringfilterelement (3) innerhalb des Filters einen inneren von einem äußeren Raum (5 bzw. 4) trennt, von denen der innere Raum (5) an den nach außen führenden zentralen Stutzen (7) offen angrenzt und der äußere Raum (4) eine Strömungsverbindung nach außen aufweist, wobei jeweils einer dieser beiden Räume (4, 5) den Filterroh- und der jeweils andere Raum den Filterreinraum bilden,
(f) sich in einem, einen axialen Endbereich des Ringfilterelementes (3) aufnehmenden Ringraum im Boden des GehäuseUnterteils (1) radial außerhalb des nach außen führenden Stutzens (7) eine Leerlauföffnung (8) befindet, durch die bei einem Wechsel des Ringfilterelementes (3) automatisch eine Zwangsentleerung zumindest des äußeren Raumes (4) erfolgt,
(g) der Boden-Ringraum eine der radialen Erstreckung des Ringfilterelementes (3) entsprechende, radiale Breite besitzt und den nach außen führenden Stutzen (7) als radiale Innenwand umfasst,
(h) das Ringfilterelement (3) in dem axialen Endbereich (9), in dem es in den Ringraum des Bodens des Unterteiles (1) ragt, eine Endscheibe (11) als stirnseitige Abdeckung umfasst,
**dadurch gekennzeichnet,**
**dass** die radial innen und außen liegenden Bereiche (12, 13) der Endscheibe (11) gegenüber der jeweils zugeordneten radialen Begrenzungswand des Boden-Ringraumes als radial wirkende Dichtungen ausgebildet sind, wodurch dieser Boden-Ringraum im Betriebszustand des Filters gegenüber dem Roh- und Reinraum (4; 5) dicht abgetrennt ist.

2. Flüssigkeitsfilter nach Anspruch 1,
**dadurch gekennzeichnet,**
**dass** die radialen Dichtbereiche (12, 13) der Endscheibe (4) angesetzte Radialdichtungen sind.

3. Flüssigkeitsfilter nach Anspruch 1 oder 2,
**dadurch gekennzeichnet,**
**dass** die Endscheibe (11) einschließlich ihrer radial dichtenden Bereiche (12, 13) einstückig aus gleichem Material ausgebildet ist.

4. Flüssigkeitsfilter nach einem der vorhergehenden Ansprüche,
**dadurch gekennzeichnet,**
**dass** die Endscheibe (11) aus Vlies besteht.

5. Flüssigkeitsfilter nach einem der Ansprüche 1 bis 3,
**dadurch gekennzeichnet,**
**dass** die inneren und äußeren radialen Dichtbereiche (12, 13) angeschweißte Vliesdichtungen sind.

6. Flüssigkeitsfilter nach Anspruch 4 oder 5,
**dadurch gekennzeichnet,**
**dass** sich in den radialen Dichtbereichen das Vliesmaterial auf jeweils einem Stützring (16, 17) des Ringfilterelementes (3) abstützt.

7. Flüssigkeitsfilter nach einem der Ansprüche 1 bis 3,
**dadurch gekennzeichnet,**
**dass** die radial dichtenden Bereiche (12, 13) als von der Endscheibe (11) abstehende, in sich federnde Stege ausgebildet sind.

8. Flüssigkeitsfilter nach Anspruch 7,
**gekennzeichnet durch** einen radial äußeren Dichtbereich, bei dem ein Ringsteg nach axial außen von der Endscheibe (11) in eine in dem Bodenbereich des Unterteiles (1) speziell vorgesehene Dichtungsringnut (15) abragt und innerhalb der Ringnut (15) radial dichtet.

9. Flüssigkeitsfilter nach Anspruch 7 oder 8,
**dadurch gekennzeichnet,**
**dass** die dichtenden Ringstege (12, 13) einen V-förmig, radial federnd wirkenden Querschnitt besitzen.

10. Flüssigkeitsfilter nach einem der vorhergehenden Ansprüche,
**dadurch gekennzeichnet,**
**dass** durch axial unterschiedlich lange, filtergehäuseseitige, den radialen Dichtbereichen (12, 13) des Ringfilterelementes (3) zugeordnete Widerlager ein zeitlich aufeinanderfolgendes Entleeren von Roh- und Reinraum (4, 5) des Ringfilterelementes (3) beginnend mit dem Rohraum (4) möglich ist.

## Claims

1. A liquid filter, wherein
(a) the housing comprises a cup-shaped lower part (1) and a cover-like upper part (2) reversibly detachable from said lower part, which enclose a cylindrical interior chamber,
(b) a ring filter element (3) provided with filter material through which radial flow can take place, is inserted exchangeably in the filter housing (1, 2),
(c) the upper part (2) of the filter housing lies at the top its operating position,
(d) the ring filter element (3) in the lower part can be slid sealingly onto a central drain connection (7) leading outside the filter housing,
(e) the ring filter element (3) inserted inside the filter separates an inner chamber from an outer chamber (5 or 4), of which the inner chamber (5) openly adjoins the outwardly leading central connection (7) and the outer chamber (4) has a flow connection to the outside, wherein respectively one of these two chambers (4, 5) forms the filter raw chamber and the respectively other chamber forms the filter clean chamber,
(f) a drain opening (8) is located in an annular chamber accommodating an axial end region of the ring filter element (3) in the bottom of the housing lower part (1), through which opening at least the outer chamber (4) is automatically forcibly emptied when changing the ring filter element (3),
(g) the bottom annular chamber has a radial width corresponding to the radial extension of the ring filter element (3) and the outwardly leading connection (7) as radial inner wall,
(h) the ring filter element (3) comprises an end disk (11) as an end cover in the axial end region (9) in which said element projects into the annular chamber of the bottom of the lower part (1),
**characterised in that** the radially inner and outer areas (12, 13) of the end disk (11) are embodied as radially acting seals towards the respectively allocated radial boundary wall of the bottom annular chamber, whereby this bottom annular chamber is sealingly separated from the raw and clean chambers (4; 5) in the operating state of the filter.

2. The liquid filter according to claim 1, **characterised in that** the radial sealing areas (12, 13) of the end disk (4) are radial seals placed thereon.

3. The liquid filter according to claim 1 or 2, **characterised in that** the end disk (11) including its radially sealing areas (12, 13) is formed in one piece from the same material.

4. The liquid filter according to any one of the preceding claims, **characterised in that** the end disk (11) is made of fleece.

5. The liquid filter according to any one of the claims 1 to 3, **characterised in that** the inner and outer radial sealing areas (12, 13) are welded-on fleece seals.

6. The liquid filter according to claim 4 or 5, **characterised in that** in the radial sealing areas, the fleece material is supported on respectively one support ring (16, 17) of the ring filter element (3).

7. The liquid filter according to any one of the claims 1 to 3, **characterised in that** the radially sealing areas (12, 13) are embodied as inherently resilient webs protruding from the end disk (11).

8. The liquid filter according to claim 7, **characterised by** a radially outer sealing area where an annular web projects axially outwards from the end disk (11) into a sealing annular groove (15) provided specially in the bottom area of the lower part (1) and seals radially inside the annular groove (15).

9. The liquid filter according to claim 7 or 8, **characterised in that** the sealing annular webs (12, 13) have a V-shaped radially resiliently acting cross-section.

10. The liquid filter according to any one of the preceding claims, **characterised in that** temporally successive emptying of raw and clean chambers (4, 5) of the ring filter element (3) beginning with the raw chamber (4) can be achieved by means of counter-bearings allocated to the radial sealing areas (12, 13) of the ring filter element (3) on the filter housing side, having different axial lengths.

## Revendications

1. Filtre à liquide, dans lequel
(a) le boîtier comporte une partie inférieure (1) en forme de pot et une partie supérieure (2) de type couvercle, amovible de façon réversible de cette partie inférieure, par lesquelles est enfermé un espace intérieur cylindrique,
(b) un élément filtrant annulaire (3), avec un matériau filtrant pouvant être balayé dans la direction radiale, peut être mis en place de façon interchangeable dans le boîtier de filtre (1, 2),
(c) la partie supérieure (2) du boîtier de filtre se situe en partie haute dans la position de fonctionnement de ce dernier,
(d) l'élément filtrant annulaire (3) peut être inséré hermétiquement dans la partie inférieure sur une tubulure d'évacuation centrale (7), menant à l'extérieur du boîtier de filtre,
(e) l'élément filtrant annulaire (3) mis en place sépare à l'intérieur du filtre un espace intérieur d'un espace extérieur (5 ou 4), dont l'espace intérieur (5) est limitrophe en ouverture à la tubulure centrale (7) menant vers l'extérieur et l'espace extérieur (4) présente une liaison d'écoulement vers l'extérieur, l'un de ces deux espaces formant l'espace brut et l'autre l'espace épuré du filtre,
(f) une ouverture de vidange (8) se situe dans un espace annulaire, recevant une zone d'extrémité axiale de l'élément filtrant annulaire (3), dans le fond de la partie inférieure (1) du boîtier, à l'extérieur, dans la direction radiale, de la tubulure (7) menant vers l'extérieur, ouverture de vidange par laquelle s'effectue automatiquement, lors d'un remplacement de l'élément filtrant annulaire (3), une vidange forcée au moins de l'espace extérieur (4),
(g) l'espace annulaire de fond présente une largeur radiale, correspondante à l'extension radiale de l'élément filtrant annulaire (3), et comprend la tubulure (7) menant vers l'extérieur sous forme de paroi intérieure radiale,
(h) l'élément filtrant annulaire (3) comprend dans la zone d'extrémité axiale (9), dans laquelle il pénètre dans l'espace annulaire du fond de la partie inférieure (1), un disque d'extrémité (11) en tant que couverture du côté frontal,
**caractérisé en ce que**,
les zones (12, 13) du disque d'extrémité (11), situées intérieurement et extérieurement dans la direction radiale, sont réalisées sous forme de joints agissant dans la direction radiale par rapport à la paroi de délimitation radiale respectivement associée de l'espace annulaire de fond, cet espace annulaire de fond étant de ce fait séparé hermétiquement par rapport à l'espace brut et à l'espace épuré (4 ; 5) dans l'état de fonctionnement du filtre.

2. Filtre à liquide suivant la revendication 1, **caractérisé en ce que** les zones d'étanchéité radiales (12, 13) du disque d'extrémité (11) sont des garnitures radiales rapportées.

3. Filtre à liquide suivant l'une des revendications 1 et 2, **caractérisé en ce que** le disque d'extrémité (11), y compris ses zones d'étanchéité (12, 13) dans la direction radiale, sont réalisés d'une seule pièce en un même matériau.

4. Filtre à liquide suivant l'une des revendications précédentes, **caractérisé en ce que** le disque d'extrémité (11) est constitué d'un non-tissé.

5. Filtre à liquide suivant l'une des revendications 1 à 3, **caractérisé en ce que** les zones d'étanchéité (12, 13) radiales intérieures et extérieures sont des garnitures en non-tissé soudées.

6. Filtre à liquide suivant l'une des revendications 4 et 5, **caractérisé en ce que** le matériau en non-tissé est supporté dans les zones d'étanchéité radiales sur une bague d'appui respective (16, 17) de l'élément filtrant annulaire (3).

7. Filtre à liquide suivant l'une des revendications 1 à 3, **caractérisé en ce que** les zones d'étanchéité radiales (12, 13) sont réalisées sous forme de profils élastiques en soi, dépassant du disque d'extrémité (11).

8. Filtre à liquide suivant la revendication 7, **caractérisé par** une zone d'étanchéité extérieure dans la direction radiale, dans laquelle un profil annulaire dépasse axialement vers l'extérieur du disque d'extrémité (11) dans une gorge annulaire d'étanchéité (15) spécialement prévue dans la zone du fond de la partie inférieure (1), et assure l'étanchéité radiale à l'intérieur de la gorge annulaire (15).

9. Filtre à liquide suivant l'une des revendications 7 et 8, **caractérisé en ce que** les profils annulaires d'étanchéité (12, 13) présentent une section transversale en V, agissant par élasticité dans la direction radiale.

10. Filtre à liquide suivant l'une des revendications précédentes, **caractérisé en ce que** des butées de longueurs différentes dans la direction axiale, du côté boîtier de filtre, associées aux zones d'étanchéité radiales (12, 13) de l'élément filtrant annulaire (3), permettent une vidange successive dans le temps de l'espace brut et de l'espace épuré (4, 5) de l'élément filtrant annulaire (3) en commençant par l'espace brut (4).
